# EUROPEAN PATENT SPECIFICATION

(11) **EP 4 159 365 B1**
(45) Date of publication and mention of the grant of the patent: **10.04.2024**
(21) Application number: 22199527.7
(22) Date of filing: 04.10.2022
(51) Int. Cl.: B23Q 3/157, B23Q 3/155

(54) **TOOL MAGAZINE FOR AN AUTOMATIC TOOL CHANGER**
WERKZEUGMAGAZIN FÜR EINEN AUTOMATISCHEN WERKZEUGWECHSLER
MAGASIN D'OUTILS POUR UN CHANGEUR D'OUTILS AUTOMATIQUE

(30) Priority: 04.10.2021 IT 202100025403
(43) Date of publication of application: 05.04.2023
(73) Proprietor: CFT Rizzardi S.r.l., 10040 Rivalta di Torino (TO) (IT)
(72) Inventor: RIZZARDI, Renzo, 10040 Rivalta di Torino (TO) (IT)
(74) Representative: Studio Torta S.p.A.

(56) References cited:
- EP-A2- 1 905 535
- US-A- 6 042 524

## Description

### TECHNICAL FIELD OF THE INVENTION

This invention relates to a tool magazine for an automatic tool changer, in particular a numerical-control machine tool.

### PRIOR ART

In the sector of mechanical processing with automatic numerical-control machine tools, it is known to use automatic tool changers, which, ensuring the machine tools a wide availability of tools on board the machine tool and avoiding interruptions in production for the operator to change the tools, make it possible to increase the productivity and operational flexibility of the machine tool, to minimise passive technical times due to the tool change, and to reduce, thus, the costs of mechanical processing.

As is known, an automatic tool changer generally comprises a tool magazine, in which the tools to be used during processing are stored, and a tool changer, which can be moved between the tool magazine and a spindle of the machine tool to perform the simultaneous change of position between a tool to be replaced fitted on the spindle and a replacing tool stored in the tool magazine. In some embodiments, the tool changer comprises a motorised arm mounted to rotate around a fixed point and provided, at its opposite ends, with grippers configured to grasp and release the tools from/on the tool magazine and the spindle following the rotation of the arm and, thus, to carry out the position change of the tools between the tool magazine and the spindle.

It is also known that, in order to be automatically changed, the tools must be designed to be interchangeable on the spindle and, to this end, each tool has a coupling portion that is equal to the coupling portion of the other tools and designed so as to simplify the operations of the tool changer's gripping the tool and of centring the tool on the spindle.

The tool magazine may be of a different kind, for example a drum magazine, and normally comprises a conveyor and a plurality of tool-holder pockets arranged in respective positions on the conveyor and normally identical so that each tool-holder pocket can receive the coupling portion of any of the tools.

The conveyor and the tool changer are electronically controlled by an electronic control unit that manages the tool change operations so that they are synchronised with the processing to be done on the machine tool.

During operation, a tool is automatically changed as follows. After receiving a tool-change command, the conveyor is caused to bring the tool-holder pocket housing the replacing tool to a tool change station, in which the tool-holder pocket is arranged in a tool change position, normally different from the tool storage position on the conveyor, so that the tool changer can reach it. At this point, the arm of the tool changer is rotated to bring one of the grippers to grasp the tool to be replaced from the spindle and the other gripper to grasp the replacing tool from the tool magazine. Thus, the arm rotates to exchange the two tools: the tool to be replaced is brought to the magazine and the replacing tool is brought to the spindle. Finally, the tool-holder pocket that has received the tool to be replaced is returned to the tool storage position and the arm rotated into an intermediate position spaced apart from the tool magazine and the spindle, and the processing with the new tool can start again at this point.

In general, the tool magazines of the known tool changers operate according to two different control logics: "random" or "fixed place".

According to the random control logic, the place occupied in the tool magazine by the replacing tool is occupied by the tool to be replaced at the time of the change; the tools are not, therefore, assigned a specific position, but the latter changes continuously inside the tool magazine. Conveniently, the electronic control unit stores the new position of each tool in the tool magazine, as the processing continues and pairs of tools are mutually changed.

According to the fixed place control logic, each tool occupies a precise position in the tool magazine, which position is not changed. Thus, at each tool change, once grasped the two tools to be changed, the arm makes a first rotation, so as to bring these tools into a position spaced apart from the tool magazine and the spindle, respectively. After this, the conveyor of the tool magazine makes the necessary movement to bring to the tool change station the tool-holder pocket specifically destined to house the tool to be replaced. At this point, the arm makes a second rotation to complete the exchange and the positioning of the tool to be replaced in its own tool-holder pocket.

Mixed control logics are also known: in this case, in the same tool magazine, some tools are positioned in specific positions and will need to be managed according to the fixed place logic to always be repositioned in the positions assigned to them, while other tools can occupy any position on the conveyor and may, thus, be managed according to the random logic.

In particular, the fixed place control logic is necessary where the tool magazine contains tools having larger dimensions than the spacing of the tools, or of the tool-holder pockets, on the tool magazine and that, therefore, need to occupy a specific position between two empty adjacent positions.

In light of what has been described above, it may be appreciated that the fixed place control logic results in a higher tool change time, even three times, than that necessary for the random control logic and, as a result, an increase in dead time during a processing cycle.

EP 1 905 535 A2 discloses a tool magazine including a track in which a plurality of tool-holder pockets is dragged. The tool magazine comprises a gear wheel having a part of the toothing extending in the track; electrically-operated geared motor means controlling the rotation of the gear wheel; a plurality of tool-holding bushes juxtaposed in the track two by two in mutual contact and for filling-in the track; at least a change station arranged in the track (12) and at which the coming-out and the reintroduction of one of the bushes at a time is determined selectively, so that when, by means of the gearmotor, the gear wheel is rotated, a bush at a time is received in a corresponding cavity of the gear wheel, it is dragged by the gear wheel along a portion of the track, it is released downwards the gear wheel and together with all other bushes outside the gear wheel is moved along the remaining portion of the track due to the push of other bushes. The simultaneous motion of all the bushes stops when the bush chosen for the tool change is at the tool change station.

US 4,196,506 A discloses a machining center including an automatic tool changer adapted for boring, drilling, milling, tapping and tool changing operations under numerical control. The machine, which may be built in both horizontal spindle and vertical spindle configurations, includes a tool storage matrix and tool transport shuttle compactly arranged on the upstanding column and a two-handed transfer arm on the headstock. The toolholders are carried in tool cups having mechanical latches. The matrix and the shuttle are also provided with mechanical latches for the tool cups actuated as an incident to transfer of tools between the matrix, shuttle, and arm or vice versa. The machine is adapted to operate with toolholders interchangeable with those for a current commercial vertical spindle machining center.

### SUBJECT AND SUMMARY OF THE INVENTION

The purpose of the presents invention is to provide a tool magazine which is highly reliable and allows at least some of the above-indicated drawbacks of known tool magazines to be overcome.

According to the invention, this purpose is achieved by a tool magazine as claimed in the appended claims.

### BRIEF DESCRIPTION OF THE DRAWINGS

Figures 1 and 2 are perspective views, with parts removed for clarity, of an automatic tool changer comprising a tool magazine according to a first preferred embodiment of the present invention, in two different operating conditions.
Figure 3 is a partially exploded, perspective view of a detail of the tool magazine shown in Figure 1.
Figures 4 and 5 are enlarged-scale, partial cross-section, perspective views of a detail of the tool magazine shown in Figure 1, in two different operating conditions.
Figures 6 and 7 are enlarged-scale, perspective views, with parts removed for clarity, of a detail of the tool magazine shown in Figure 1, in two different operating conditions.
Figure 8 is a partially exploded perspective view of the detail shown in Figures 6 and 7.
Figures 9A-9E schematically represent operating steps of the automatic tool changer shown in Figure 1 when replacing a "random-place" tool with a "fixed-place" tool.
Figures 10A-10E schematically represent operating steps of the automatic the tool changer shown in Figure 1 when replacing a "fixed-place" tool with a "random-place" tool.
Figures 11 and 12 are perspective views, with parts removed for clarity, of the automatic tool changer according to a second preferred embodiment of the present invention, in two different operating conditions.

### DETAILED DESCRIPTION OF PREFERRED EMBODIMENTS OF THE INVENTION

With reference to the attached Figures, reference numeral 1 references, as a whole, an automatic tool changer for a numerical-control machine tool 2 (known per se and only partially shown for the purposes of understanding this invention) designed to perform mechanical processing on pieces of various shapes and materials be means of tools 3.

To this end, the machine tool 2 comprises a spindle 4 configured to receive one tool 3 at a time and, according to a known modality not described in detail, to drive the tool 3 so as to carry out the desired processing on a piece (not shown).

The automatic tool changer 1 comprises:
- a tool magazine 5 configured to store a plurality of tools 3; and
- a tool changer 6 configured to simultaneously withdraw a replacing tool 3 from the tool magazine 5 and a tool 3 to be replaced from the spindle 4 and to exchange the tools 3 so that the replacing tool 3 is arranged on the spindle 4 and the tool to be replaced is put back in the tool magazine 5.

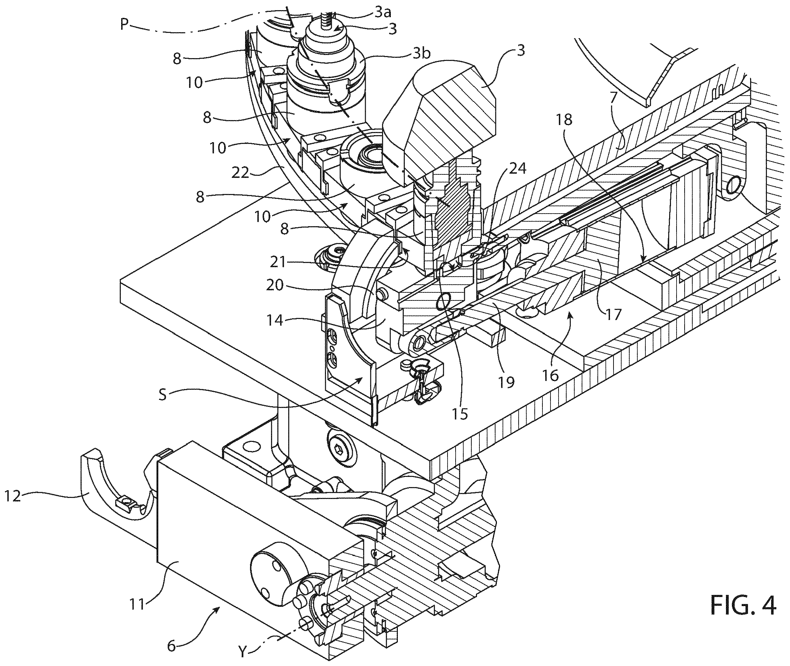

In this discussion, the term tool 3 is meant to indicate the assembly constituted by the actual tool (indicated in the attached Figures with the reference numeral 3a) and the tool carrier or coupling portion 3b, which is firmly connected to the actual tool 3a and defines the mechanical coupling interface of the tool 3 to the tool magazine 5 and to the spindle 4 (Figure 4). Since all the tools 3 have to be mutually exchanged and coupled to the spindle 4, the coupling portions 3b of the tools 3 are all identical.

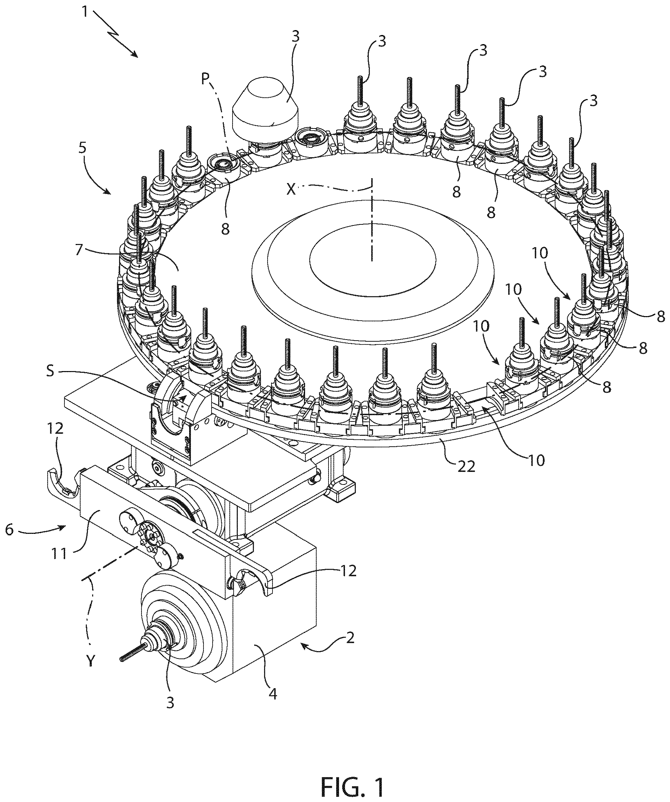

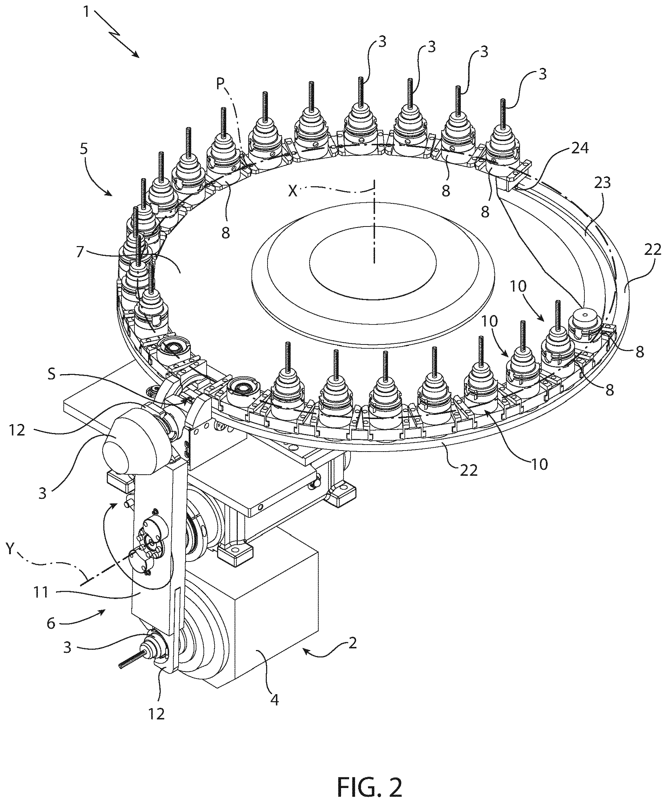

As shown in Figures 1 and 2, the tool magazine 5 is of a drum type and comprises a conveyor, in particular a rotary table 7 mounted to rotate about an axis X, and a plurality of tool-holder pockets 8 carried by the rotary table 7 to be moved, as a result of the rotation of the rotary table 7 about the axis X, along the conveying path P and through a tool change station S.

In more detail, the tool-holder pockets 8 are arranged at a peripheral portion of the rotary table 7 and the conveying path P is a closed-loop path.

In particular, the rotary table 7 comprises a plurality of support pouches or seats 10, each of which is designed to house a corresponding tool-holder pocket 8 to guide it along the conveying path P.

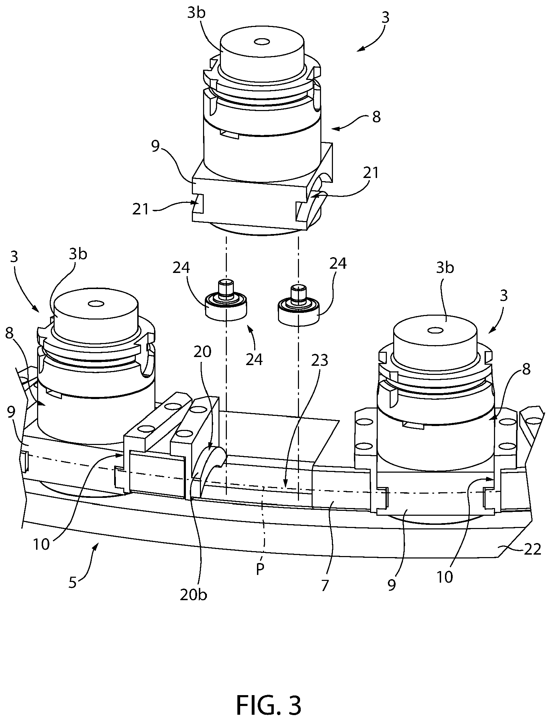

As shown in the attached Figures, in particular in Figure 3, the seats 10 are formed along a peripheral edge of the rotary table 7 so as to be open at least on their radially outer side, with respect to the axis X, and are each coupled to a base portion 9 of the corresponding tool-holder pocket 8. Conveniently, the seats 10 are evenly angularly distributed around the axis X with a constant pitch.

Each tool-holder pocket 8 comprises, on the opposite side to the corresponding base portion 9, a cavity designed to receive and removably hold the coupling portion 3b of any of the tools 3. In this way, the tools 3 are interchangeable with each tool-holder pocket 8 and with the spindle 4.

The tool-holder pockets 8 are coupled to the rotary table 7 so that they can be individually automatically disengaged from the rotary table 7 in the tool change station S so as to allow the rotary table 7 to move the other tool-holder pockets 8 that remain engaged with the rotary table 7 along the conveying path P, leaving, instead, the tool-holder pocket 8 disengaged from the rotary table 7 in the tool change station S.

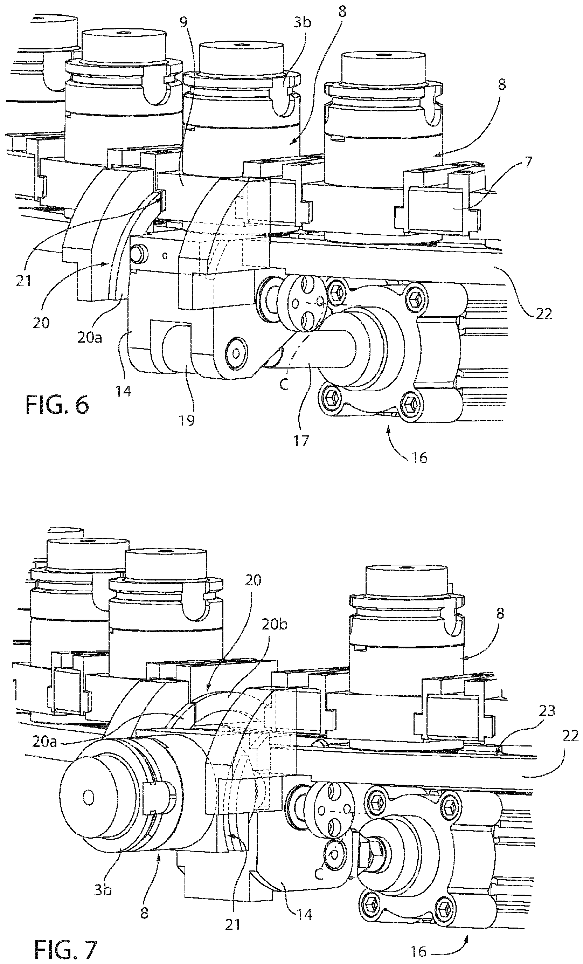

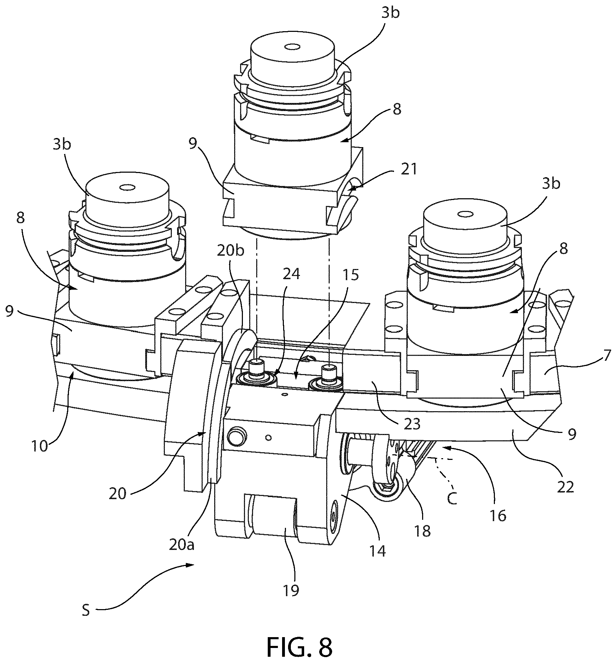

More precisely, each tool-holder pocket 8 can be moved, in the tool change station S, between:
- a conveying position (Figures 4 and 6), in which it is engaged to the rotary table 7 and can be moved along the conveying path P as a result of the rotation of the rotary table 7; and
- a change position (Figures 6 and 8), in which it is disengaged from the rotary table 7 and remains stationary in the tool change station S, while the other tool-holder pockets 8 can be moved along the conveying path P as a result of the rotation of the rotary table 7.

All the tool-holder pockets 8 carried by the rotary table 7 are preferably disengageable from the rotary table 7.

In order to guide the tool-holder pockets 8 along the conveying path P, the tool magazine 5 comprises a fixed guide device 22 that, in the example shown, is in the form of a fixed disk, which is arranged facing the rotary table 7, opposite to the tool-holder pocket 8, and has, on one surface facing the rotary table 7, an annular groove 23 that is coaxial to the axis X and defining the conveying path P of the tool-holder pocket 8.

Each tool-holder pocket 8 is coupled to the guide device 22, in this example the above-mentioned fixed disk, via a corresponding slide 24 that is slidably engaged in the groove 23. In the example shown, the slide 24 is formed by a pair of cam-follower rollers, which slidably engage the groove 23 and are so sized as to prevent the tool-holder pocket 8 from moving in a radial direction in relation to the axis X so as to ensure the stability and precision of the coupling between the tool-holder pocket 8 and the rotary table 7.

According to the preferred and non-limiting embodiment shown in Figures 1 to 10, the tool changer 6 comprises an arm 11 that is mounted between the tool magazine 5 and the spindle 4 to rotate about a fixed axis Y transverse to the arm 11 and to the axis X, and two grippers 12 arranged at respective free ends of the arm 11 to be conveyed by the arm 11 in a rotary movement about the axis Y.

When, during operation, the tool changer 6 is operated to replace a tool 3 on the spindle 4 with a tool 3 in the tool magazine 5, the arm 11 is first rotated about the axis Y to bring the grippers 12 to simultaneously engage the tool 3 to be replaced on the spindle 4 and the replacing tool 3 in the tool-holder pocket 8 that is in the tool change station S in the above-mentioned change position, and is then rotated to simultaneously release, in inverted positions, the tool 3 to be replaced and the replacing tool 3.

In particular, the arm 11 is movable between an angular gripping and release position, in which the grippers 12 grasp and release the replacing tool 3 and the tool 3 to be replaced (Figure 2), and an intermediate angular position, through which the arm 11 passes during the change of tools 3 and in which the arm 11 stops after releasing the tools in the tool magazine 5 and on the spindle 4 (Figure 1).

In the example shown in Figures 1 and 2, the angular gripping and intermediate positions are angularly spaced apart by 90°.

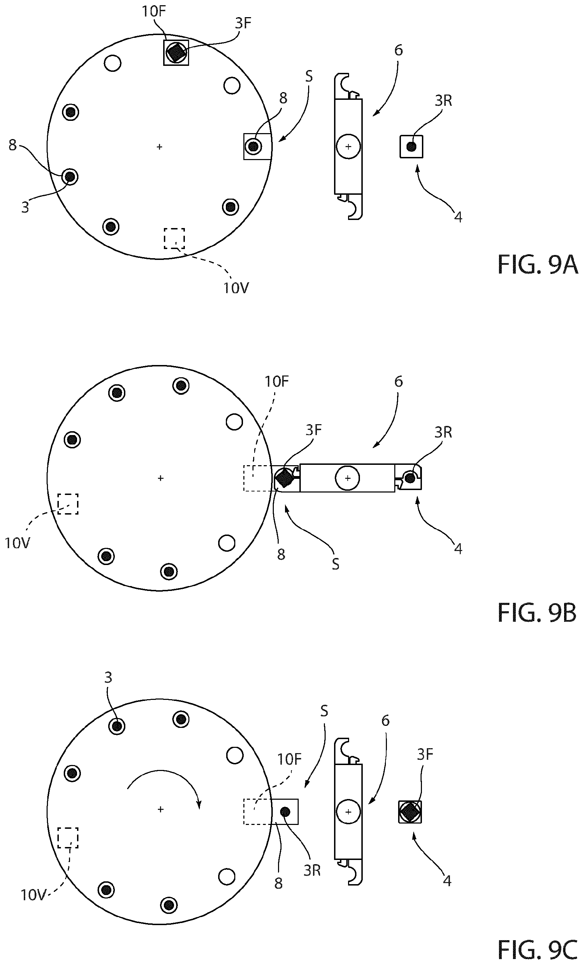

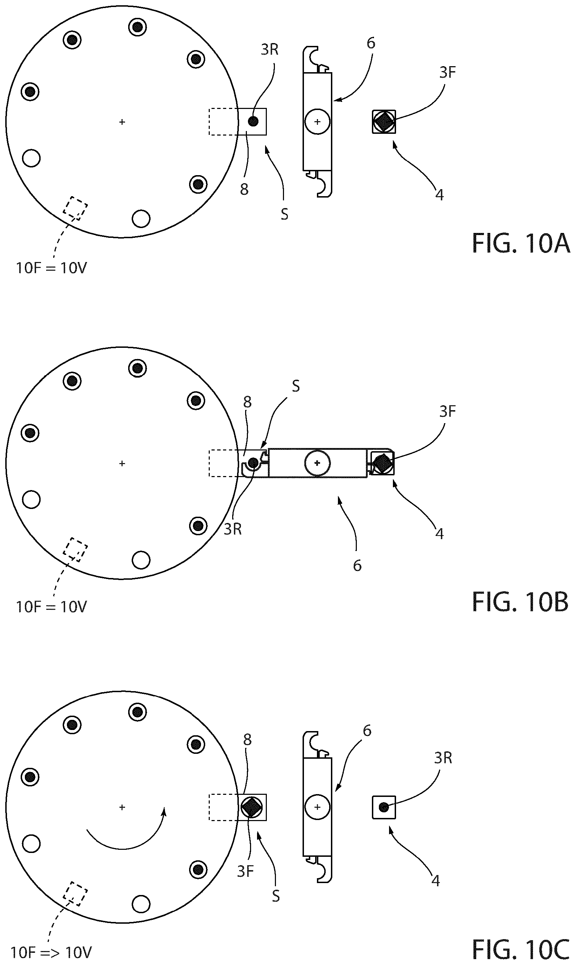

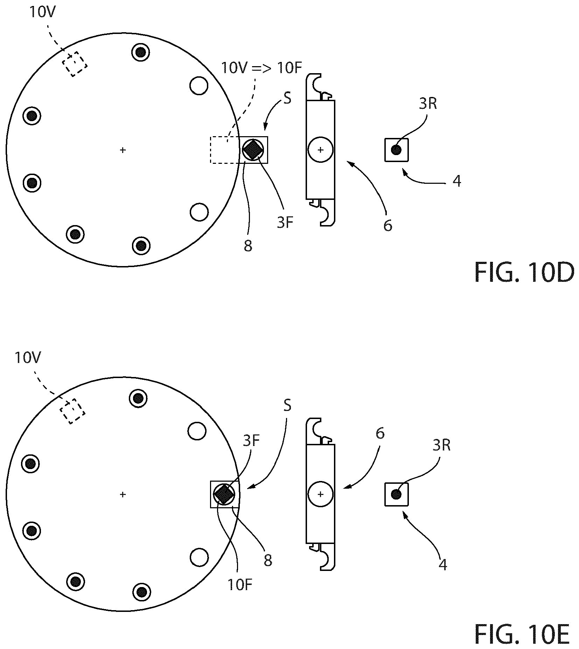

Conveniently, the automatic tool changer 1 further comprises an electronic control unit 13 (Figures 9A-9E and 10A-10E) programmed to control the movement of the rotary table 7 about the axis X, *i.e.,* the tool-holder pockets 8 along the conveying path P, the movement of the tool changer 6, *i.e.,* the rotation of the arm 11 about the axis Y, and the movement of the tool-holder pockets 8 between the conveying position and the change position in the tool change station S.

As it will be explained in more detail below, the electronic control unit 13 is programmed to control the movement of the rotary table 7, the tool changer 6, and the tool-holder pocket 8 arranged in the tool change station S based on the type of tools 3 to be changed, in particular based on whether the tools 3 have to be managed according to the "random place" logic (known per se), *i.e.,* whether the tools 3, when they are withdrawn from the spindle 4 and returned to the tool magazine 5, may occupy any position, *i.e.,* any seat 10, on the rotary table 7, or whether the tools 3 have to be managed according to the "fixed place" logic (known), *i.e.,* whether the tools 3 are intended to occupy only one specific position, *i.e.,* a specific seat 10 assigned thereto, on the rotary table 7.

In the tool magazine 5 according to the embodiment exemplarily shown in the attached Figures, a plurality of tools 3 are stored that are intended to be managed according to the "random place" logic and one tool 3 is stored that is intended to be managed according to the "fixed place" logic.

In particular, in the example described, the "fixed place" tool 3 is greater than the other tools 3, or, in any case, greater than the pitch between the seats 10 around the axis X of the rotary table 7 and, for this reason, the seat 10 assigned to the "fixed place" tool 3 on the rotary table 7 is placed between two adjacent seats 10 destined to remain empty or, at the most, occupied by respective tool-holder pockets 8 without tools 3.

In addition, as shown in Figures 1 and 2, the tools 3 and the corresponding tool-holder pockets 8 are stored on the rotary table 7 in such a way that the rotary table 7 has always at least one empty position, *i.e.,* so that, during operation, there is always at least one seat 10 empty from a respective tool-holder pocket 8. The arrangement of one empty pocket 10, in a position that changes during use with the changing of the tools 3 on the rotary table 7 enables, in combination with the possibility of disengaging the tool-holder pocket 8 in the tool change station S from the rotary table 7, the changing of the "fixed place" tools with a similar method to the changing of "random place" tools, as will be clearer from what is described below.

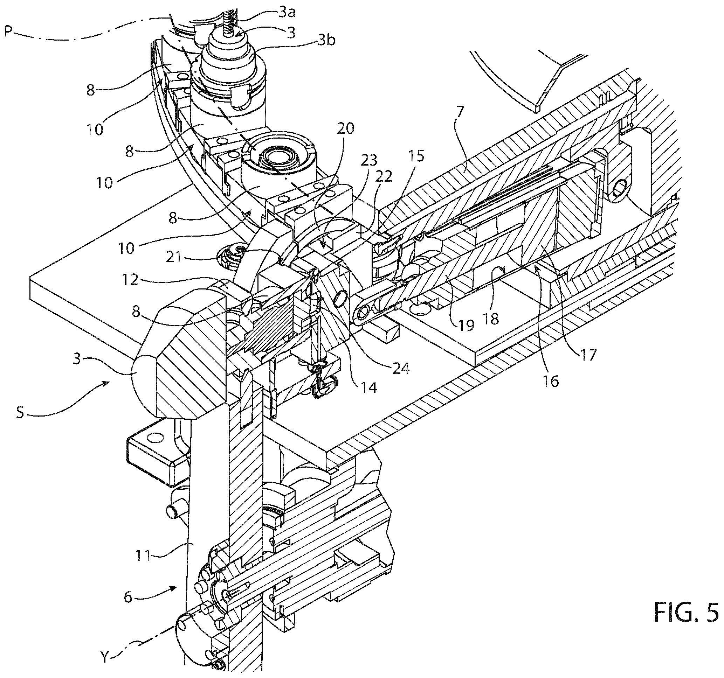

As shown in Figures 4-8, the tool magazine 5 further comprises:
- a disengagement device 14 arranged at the tool change station S and operable to move the tool-holder pocket 8 in the tool change station S from the conveying position to the change position, in which the tool-holder pocket 8 is disengaged from the rotary table 7; and
- an actuator 16 coupled to the disengagement device 14 to move it between a receiving position (Figures 4 and 6), in which the disengagement device 14 is coupled to the tool-holder pocket 8 arranged in the conveying position in the tool change station S, and a disengaging position (Figures 5 and 7), in which the disengagement device 14 arranges the tool-holder pocket 8 to which it is still coupled in the corresponding change position.

According to the preferred embodiment shown in Figures 1 to 10, the disengagement device 14 is mounted to tilt at the tool change station S on the side of the rotary table 7 opposite that which carries the tool-holder pockets 8 and is hinged to a fixed pin to rotate about an axis C and to tilt between the receiving position and the disengaging position under the thrust of the actuator 16.

The fixed pin is preferably supported by a bracket fixedly connected to the guide device 22 and the axis C is transverse to both the axis X and the axis Y (Figures 1 and 2).

The disengagement device 14 has a coupling seat designed to allow the disengagement device 14 to automatically couple, when it is in the receiving position, with a tool-holder pocket 8 arranged in the conveying position in the tool change station S.

To this end, the guide device 22 has, at the tool change station, a peripheral recess that interrupts the groove 23, and the above-mentioned coupling seat of the disengagement device 14 is defined by a curved groove 15 that, when the disengagement device 14 is in the receiving position, is continuous with the groove 23 so as to form an extension of the groove 23 and so give continuity to the conveying path P of the tool-holder pocket 8. In this way, during the rotation of the rotary table 7 and the movement of the tool-holder pockets 8 along the conveying path P, the groove 15 is travelled along by the slides 24, in this case by the cam-follower rollers carried by the base portion 9 of the tool-holder pockets 8, as if the groove 23 were uninterrupted.

When one of the tool-holder pockets 8 is stopped in the tool change station S, the engagement between the slide 24 of the tool-holder pocket 8 and the groove 15 results in an automatic coupling between the disengagement device 14 and the tool-holder pocket 8, which become mutually integral. In this way, the movement of the disengagement device 14 from the receiving position to the disengaging position causes the tool-holder pocket 8 to move from the conveying position to the change position.

In detail, the actuator 16 comprises a double-effect piston 17 slidable inside a cylinder 18 and a connecting rod 19 fixed to the piston 17 and hinged to the disengagement device 14 in a position diametrically opposite the groove 15 in relation to the rotation axis of the disengagement device 14, so that the thrust imparted to the disengagement device 14 by a linear movement of the piston 17 causes the disengagement device 14 to oscillate about the axis C.

More precisely, the piston 17 is slidable between an extracted position (Figure 3), in which the disengagement device 14 assumes the receiving position, and a withdrawn position (Figure 5), in which the disengagement device 14 assumes the disengaging position, in which the tool-holder pocket 8 coupled to the groove 15 assumes the above-mentioned change position.

The tool-holder pocket 8 is guided in its movement between the conveying and disengaging positions in the tool change station S by two facing lateral guides 20 designed to slidably cooperate with respective lateral slides 21 formed on opposite sides of the tool-holder pocket 8.

In particular, as shown in Figures 4, 5, 6, 7 and 8, each of the two lateral guides 20 comprises a first portion 20a stationary in the tool change station S and a second portion 20b formed on each support seat 10 and, hence, is movable with the support seat 10 as a result of the rotation of the rotary table 7 and is aligned with the corresponding first portion 20a only when the support seat 10 is in the tool change station S.

In this example, the first portions 20a of the two lateral guides 20 are arranged outside the rotary table 7, on opposite sides of the disengagement device 14, and each first portion 20a is defined by a curved track coaxial to the rotation axis C of the disengagement device 14.

The second portions 20b of each lateral guide 20 are arranged on respective sides of each support seat 10 and are defined by respective curved tracks that, when the corresponding support seat 10 is in the tool change station S, are coaxial to the rotation axis C of the disengagement device 14 and each form an extension of the corresponding first portion 20a of the linear guide 20.

As shown in Figures 7 and 8, the lateral slides 21 integral with the tool-holder pocket 8 comprise respective grooves formed on opposite sides of the base portion 9 of the tool-holder pocket 8 so as to slide along the first portions 20a and the second portions 20b of the corresponding lateral guides 20 when the tool-holder pocket 8 is moved by the disengagement device 14 towards and from the change position.

Due to the second portions 20b of the lateral guides 20 being stationary and separated by the corresponding first portions 20a, and to the lateral slides 21 of the tool-holder pocket 8 being so sized that, when the tool-holder pocket 8 is in the change position, the lateral slides 21 engage only the second portions 20b of the lateral guides 20 and are completely detached from the first portions 20a, in the change position, the tool-holder pocket 8 is completely detached from the rotary table 7 and, thus, the rotary table 7 can freely rotate without the tool-holder pocket 8 that remained in the tool change station S.

In other words, in the tool change station S, the tool-holder pockets 8 are able to disengage from the rotary table 7 and couple with the disengagement device 14 automatically, *i.e.,* not as a result of an outside intervention, but as the direct result of the fact that, in the tool change station S, the slide 24 of the tool-holder pocket 8, in this case the cam-follower rollers, is no longer engaged in the groove 23 of the guide device 22, but in the groove 15 of the disengagement device 14.

When the disengagement device 14 rotates into the disengaging position, the groove 15 is no longer aligned with the groove 23. If, in this configuration, the rotary table 7 is rotated, the tool-holder pockets 8 that remained engaged with the rotary table 7 are dragged along the conveying path P and, being attached in the corresponding seats 10, maintain their correct position on the rotary table 7 also along the section of the conveying path P that crosses the tool change station, despite the absence of the groove 15.

The fact that the tool-holder pockets 8 are able to be automatically disengaged from the rotary table 7 and engaged to the disengagement device 14 and that, after a tool-holder pocket 8 has been moved into the change position by the disengagement device 14, the rotary table 7 is free to rotate without the disengaged tool-holder pocket 8 ensure that it is possible to operate according to a "random" logic, even if the replacing tool or the tool to be replaced is a "fixed place" tool. In fact, as in the "random" logic, even if the replacing tool or the tool to be replaced is a "fixed place" tool, it is possible to leave the tool 3 removed from the spindle 4 on the tool-holder pocket 8 arranged in the change position, to shift immediately the tool changer 6 into the intermediate position so as to make the machine tool 2 start again and reposition the tool 3 removed while the machine tool 2 has started working again.

By way of example, Figures 9A-9E schematically show the case in which a "random place" tool is to be replaced by a "fixed place" tool, while Figures 10A-10E schematically shows the case in which a "fixed place" tool is to be replaced with a "random place" tool.

The rotary table 7 comprises, for simplicity, nine seats 10, of which six seats 10 may be interchangeably occupied by "random place" tools, and one seat 10 (identified with the reference numeral 10F) is exclusively assigned to one "fixed place" tool (identified with the reference numeral 3F) and is arranged between two seats 10 with the respective empty tool-holder pockets 8 (as shown in the Figures) or, alternatively, without tool-holder pockets 8. In addition, one of the seats 10 (identified with the reference numeral 10V) is empty or free of tool-holder pockets 8.

**Case 1 -** **Figures 9A-9E****:** the replacing tool is a "fixed place" tool 3F, the tool to be replaced is a "random place" tool 3 (identified with the reference numeral 3R) (Figure 9A).

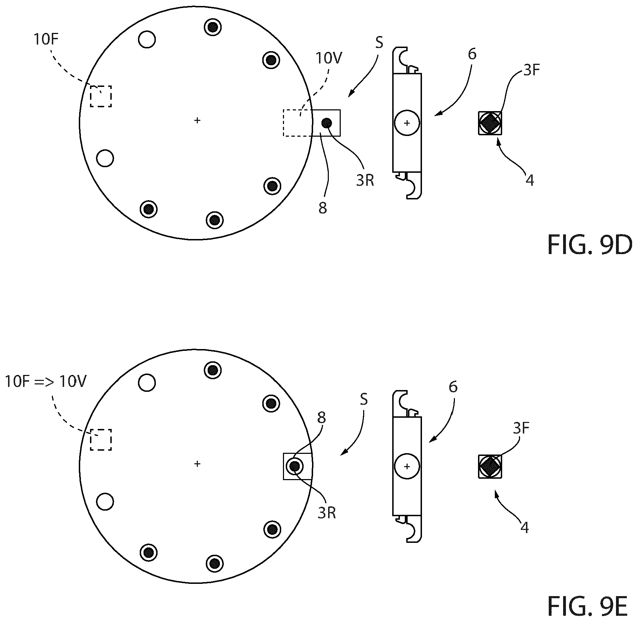

After the rotary table 7 has brought the "fixed place" tool 3F to the tool change station S and the disengagement device 14 has moved the tool-holder pocket 8 with the "fixed place" tool 3F into the change position, the changer 6 simultaneously withdraws the "fixed place" tool 3F from its tool-holder pocket 8 and the "random place" tool 3R from the spindle 4 (Figure 9B) and changes them, placing the "random place" tool 3R in the tool-holder pocket 8 previously occupied by the "fixed place" tool 3F and then moving into the intermediate position (Figure 9C), thus enabling the machine tool 2 to recommence working. Since the tool-holder pocket 8 with the "random place" tool 3R cannot occupy the seat 10F assigned to the "fixed place" tool 3F, the tool-holder pocket 8 arranged in the change position with the "random place" tool 3R is not returned to the conveying position on the rotary table 7 but, while the machine tool 2 works, the rotary table 7 is rotated, without the disengaged tool-holder pocket 8, until it brings the seat 10V, initially empty, to the tool change station S (Figure 9D). At this point, via the movement of the disengagement device 14 from the disengaging position to the receiving position, the tool-holder pocket 8 that remains waiting in the tool change station S with the "random" tool 3R is repositioned in its conveying position occupying the seat 10V (Figure 9E). On the rotary table 7, the seat 10F remains empty and becomes the pocket 10V.

**Case 2 -** **Figures 10A-10E****:** the replacing tool is a "random place" tool 3R, the tool to be replaced is a "fixed place" tool 3F.

After the rotary table 7 has brought the "random place" tool 3R to the tool change station S and the disengagement device 14 has moved the tool-holder pocket 8 with the "random place" tool 3R into the change position (Figure 10A), the changer 6 simultaneously withdraws the "random place" tool 3R from its tool-holder pocket 8 and the "fixed place" tool 3F from the spindle 4 (Figure 10B) and changes them, depositing the "fixed place" tool 3F in the tool-holder pocket 8, previously occupied by the "random place" tool 3R and then moving into the intermediate position (Figure 10C). Since the "fixed place" tool 3F cannot occupy any seat 10 on the rotary table 7, but must occupy the seat 3F assigned to it, the tool-holder pocket 8 arranged in the change position with the "fixed place" tool 3F is not returned to the conveying position on the rotary table 7 but, while the machine tool works, the rotary table 7 is rotated, without the disengaged tool-holder pocket 8, until it brings the seat 10F that is empty to the tool change station S (Figure 10D). At this point, via the movement of the disengagement device 14 from the disengaging position to the receiving position, the tool-holder pocket 8 that remains waiting in the tool change station S with the "fixed place" tool 3F is repositioned in its conveying position occupying the seat 10F. On the rotary table 7, the seat 10 previously occupied by the "random" tool 3R loaded on the spindle 4 remains empty and defines the seat 10V.

In light of the above, it may be appreciated that the fact that the tool-holder pockets 8 may be disengaged from their seats 10 in the tool change station to enable the rotary table 7 to rotate and bring another empty seat 10 into the tool change station S suitable for being occupied by the disengaged tool-holder pocket 8, enables the elimination of conventional dead time when one of the tools involved in the tool change is of the "fixed place" kind, being able to manage, in this case too, the tool change with the same time frames of a tool change between "random place" tools.

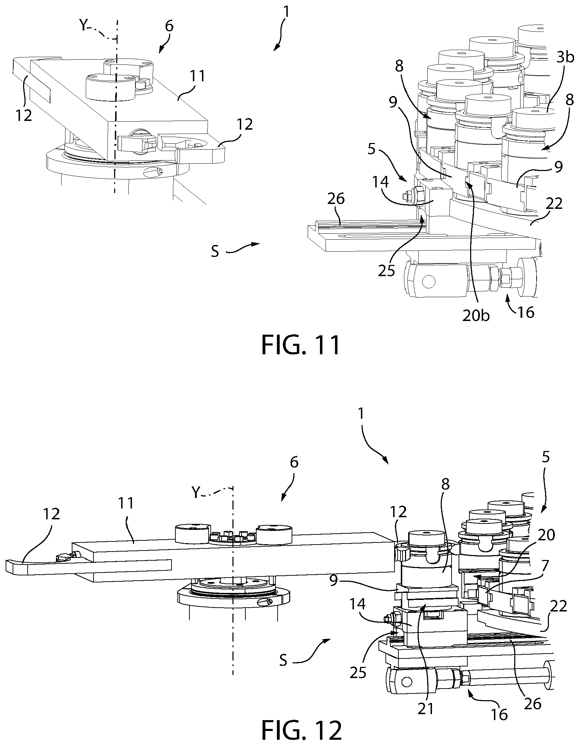

Figures 11 and 12 show a further embodiment of the automatic tool changer of the present invention. This embodiment differs from that shown in Figures 1 to 10 basically only as to how the disengagement device 14 is moved from the receiving position to the disengaging position and, as a result, as to how the tool-holder pocket 8 arranged in the tool change station S is moved from the conveying position to the change position. For this reason, for the purposes of clarity, in the following description the same reference numerals will be used, where possible, to reference parts of Figures 11 and 12 that are equal or correspond to parts of Figures 1-10.

In this case, the disengagement device 14 is not mounted to rotate about a fixed axis (axis C - Figures 6 and 7), but to displace radially with respect to the rotation axis X of the rotary table 7 so as to radially extract the tool-holder pocket 8.

The way in which the tool-holder pockets 8 automatically disengage from the rotary table 7 to automatically couple to the disengagement device 14 remains unchanged compared to the above-described embodiment, namely occurs as a result of the fact that, in the tool change station S, the slide 24 of the tool-holder pocket 8, in this case the cam-follower rollers, no longer engages the groove 23 of the guide device 22, but engages the groove 15 of the disengagement device 14.

Opposite to the groove 15, the disengagement device 14 comprises an additional groove 25 slidably engaged along a fixed linear guide 26 extending radially with respect to the rotation axis X of the rotary table 7. During operation, the disengagement device 14 is moved along the linear guide 26 between the receiving position (Figure 11) and the disengaging position (Figure 12) by means of the hydraulic actuator 16. The disengagement device 14 and the hydraulic actuator 16 are preferably arranged on opposite sides of the linear guide 26 and the piston 17 is rigidly connected to an appendage of the disengagement device 14 extending transversely through the linear guide 26.

Since the tool-holder pockets 8 are moved between the conveying and change positions, not via a rotation, as in the previous embodiment, but via a displacement in a radial direction with respect to the rotary table 7, in this embodiment the slides 21 formed on the sides of the base portion 9 of the tool-holder pockets 8 are not curved but straight. Correspondingly, the lateral guides 20 too, which in this case comprise just the stationary portions 20b formed on, and movable with, each seat 10, are linear and not curved to be able to slidably couple with the slides 21 of each tool-holder pocket 8.

In the end, as shown in Figures 11 and 12, the radial extraction of the tool-holder pockets 8 in the tool change station S also entails a different orientation of the tool changer 6 compared to the above-described embodiment.

In this case, in fact, the arm 11 of the tool changer 6 is mounted to rotate about a fixed axis Y parallel to the rotation axis X of the rotary table 7 so that the grippers 12 move on a plane parallel to the rotary table 7 and are able to grasp and release the tool-holder pockets 8 radially extracted from the rotary table 7. The spindle 4 (not shown in Figures 11 and 12) is suitably oriented so as to be able to receive/release the tool-holder pockets 8 from/to the grippers 12.

## Claims

1. A tool magazine (5) for an automatic tool changer (1) for a numerical-control machine tool (2); the tool magazine (5) comprises a conveyor (7) and a plurality of tool-holder pockets (8) carried by the conveyor (7) to move along a conveying path (P) and through a tool change station (S);
the conveyor (7) comprises a plurality of support seats (10) designed to individually releasably house respective tool-holder pockets (8) to guide them along the conveying path (P);
the tool-holder pockets (8) are mounted on the conveyor (7) so as to be individually automatically disengageable from the conveyor (7) in the tool change station (S) to allow the conveyor (7) to move the tool-holder pockets (8) engaged to the conveyor (7) along the conveying path (P), while leaving a tool-holder pocket (8) disengaged from the conveyor (7) in the tool change station (S);
the tool magazine (5) further comprises a disengagement device (14) arranged at the tool change station (S) to move a tool-holder pocket (8) in the tool change station (S) from a conveying position, in which the tool-holder pocket (8) is housed in a support seat (10) and engaged to the conveyor (7), and a change position, in which the tool-holder pocket (8) is extracted from the support seat (10) and disengaged from the conveyor (7) and may be left in the tool change station (S), while the other tool-holder pockets (8) may be moved by the conveyor (7) along the conveying path (P);
the disengagement device (14) is movable between a receiving position, in which the disengagement device (14) is coupled to the tool-holder pocket (8) arranged in the conveying position in the tool change station (S), and a disengaging position, in which the disengagement device (14) holds the tool-holder pocket (8), to which it is still coupled, in the change position;
the conveyor (7) and the disengagement device (14) are mutually arranged such that the conveyor (7) is free to move the tool-holder pockets (8) along the conveying path (P) when the disengagement device (14) is both in the receiving position and in the disengaging position;
the disengagement device (14) is configured to automatically couple, when it is in the receiving position, with a tool-holder pocket (8) arranged in the conveying position in the tool change station (S), so as to move the tool-holder pocket (8) from the conveying position to the change position when the disengagement device (14) moves from the receiving position to the disengaging position;
each support seat (10) is so shaped as to allow the tool-holder pocket (8) housed in the support seat (10) to automatically disengage from the support seat (10) in the tool change station (S) as a result of the automatic coupling of the tool-holder pocket (8) with the disengagement device (14) and of the movement of the disengagement device (14) from the receiving position to the disengaging position;
the tool magazine (5) further comprises a guide device (22) carried by the conveyor (7) and extending along the conveying path (P), except for a section thereof the conveying path (P) extending through the tool change station (S), to guide the tool-holder pockets (8) along the conveying path (P);
the guide device (22) comprises a groove (23) interrupted at the change station (S), so as to define the conveying path (P) of the tool-holder pockets (8), except for the section of the conveying path (P) extending through the tool change station (S);
each tool-holder pocket (8) comprises a slide (24) slidably coupled to the groove (23);
the disengagement device (14) further comprises a coupling seat (15) designed to cooperate with the guide device (22) when the disengagement device (14) is in the receiving position to guide the tool-holder pockets (8) along the section of the conveying path (P) extending through the tool change station (S) and to automatically couple the disengagement device (14) to the tool-holder pocket (8) in the conveying position in the tool change station (S);
the coupling seat (15) of the disengagement device (14) is formed by a further groove (15) that, when the disengagement device (14) is in the receiving position, is continuous with the groove (23) of the guide device (22) so as to form an extension of the groove (23) of the guide device (22) and give continuity to the conveying path (P) of the tool-holder pockets (8).

2. The tool magazine (5) of claim **1,** wherein a tool-holder pocket (8) arranged in the conveying position in the tool change station (S) is guided in its movement between the conveying position and the disengagement position by two facing lateral guides (20) designed to slidably cooperate with respective lateral slides (21) formed on opposite sides of the tool-holder pocket (8).

3. The tool magazine (5) of claim **2,** wherein each of the two lateral guides (20) comprises a first portion (20a) stationary in the tool change station (S) and a second portion (20b) formed on each support seat (10) to be movable with the support seat (10) as a result of the movement of the conveyor (7) and is aligned with the corresponding first portion (20a) only when the support seat (10) is stationary in the tool change station (S).

4. The tool magazine (5) of claim **3,** wherein the first portions (20a) of the two lateral guides (20) are arranged outside the conveyor (7), on opposite sides of the disengagement device (14) and are defined by respective tracks;
the second portions (20b) of each lateral guide (20) are arranged on respective sides of each support seat (10) and are defined by respective tracks that, when the corresponding support seat (10) is in the tool change station (S), each form the extension of the corresponding first portion (20a) of the linear guide (20).

5. The tool magazine (5) of any of the preceding claims, wherein the conveyor comprises a rotary table (7) mounted to rotate about an axis (X); the tool-holder pockets (8) are arranged along a peripheral portion of the rotary table (7), and the conveying path (P) is a closed ring path; and the guide device (22) comprises a fixed disc, which is arranged facing the rotary table (7), on the opposite side with respect to the tool-holder pocket (8), and has, on a surface facing the rotary table (7), an annular groove (23) that is coaxial to the axis (X) and defines the groove (23) interrupted at the tool change station (S).

6. The tool magazine (5) of claim **5,** when dependent on claim **4,** wherein the disengagement device (14) is mounted to rotate about a fixed axis (C) between the receiving position and the disengaging position, which defines a tilting position of the tool-holder pocket (8) with respect to the rotary table (7);
the first portions (20a) of the two lateral guides (20) are arranged outside the rotary table (7), on opposite sides of the disengagement device (14), and each first portion (20a) is defined by a curved track coaxial to the rotation axis (C) of the disengagement device (14); and
the second portions (20b) of each lateral guide (20) are arranged on respective sides of each support seat (10) and are defined by respective curved tracks that, when the corresponding support seat (10) is in the tool change station (S), are coaxial to the rotation axis (C) of the disengagement device (14) and each form the extension of the corresponding first portion (20a) of the linear guide (20).

7. An automatic tool changer (1) for a numerical-control machine tool (2), the tool changer (1) comprises:
- the tool magazine (5) of any one of the preceding claims to store a plurality of tools (3); and
- a tool changer (6) to simultaneously pick-up a first tool (3) from a respective tool-holder pocket (8) disengaged from the conveyor (7) in the tool change station (S), and a second tool (3) from the machine tool (2) and to exchange the tools (3) so that the first tool (3) is coupled to the machine tool (2) and the second tool (3) is coupled to the tool-holder pocket (8).

8. The tool changer of claim **7,** further comprising an electronic control unit (13) to control operation of the conveyor (7) and of the tool changer (6) and engagement/disengagement of the tool-holder pockets (8) from the conveyor (7) in the tool exchange station (S);
the conveyor (7) has a plurality of support seats (10) to receive and carry respective tool-holder pockets (8), and wherein, during operation, at least one of the support seats (10) is empty of a tool-holder pocket (8) to define an empty position on the conveyor (7);
the electronic control unit (13) is configured to cause, sequentially and for a pair of first and second tools (3) to be exchanged:
- the conveyor (7) to bring a tool-holder pocket (8) to the tool change station (S);
- the tool-holder pocket (8) in the tool change station (S) to move from the conveying position, in which the tool-holder pocket (8) engages the conveyor (7), to the change position, in which the tool-holder pocket (8) is disengaged from the conveyor (7);
- the machine tool (2) to stop;
- the tool changer (6) to simultaneous pick-up the first and second tools (3);
- the tool exchanger (6) to exchange the first and second tools (3);
- the machine tool (2) to operate;
- the conveyor (7) to bring the empty support seat (10) to the tool change station (S); and
- the tool-holder pocket (8) in the tool change station (S) to move from the change position to the conveying position, so as to cause the tool-holder pocket (8) to occupy the empty position on the conveyor (7) and the tool-holder pocket (8) to re-engage the conveyor (7).

## Patentansprüche

1. Werkzeugmagazin (5) für einen automatischen Werkzeugwechsler (1) für eine numerisch gesteuerte Werkzeugmaschine (2); wobei
das Werkzeugmagazin (5) einen Förderer (7) und eine Vielzahl von Werkzeug- und Werkzeughaltetaschen (8) umfasst, die von dem Förderer (7) getragen werden, um sich entlang eines Förderweges (P) und durch eine Werkzeugwechselstation (S) zu bewegen,
der Förderer (7) eine Vielzahl von Trägersitzen (10) umfasst, die so gestaltet sind, dass sie die jeweiligen Werkzeughaltetaschen (8) einzeln lösbar aufnehmen, um sie entlang des Förderweges (P) zu führen;
die Werkzeughaltetaschen (8) an dem Förderer (7) so angebracht sind, dass sie einzeln automatisch von dem Förderer (7) in der Werkzeugwechselstation (S) lösbar sind, um es dem Förderer (7) zu ermöglichen, die mit dem Förderer (7) in Eingriff stehenden Werkzeughaltetaschen (8) entlang des Förderweges (P) zu bewegen, während eine Werkzeughaltetasche (8) von dem Förderer (7) in der Werkzeugwechselstation (S) gelöst bleibt;
das Werkzeugmagazin (5) weiterhin eine Ausrückvorrichtung (14) umfasst, die an der Werkzeugwechselstation (S) angeordnet ist, um eine Werkzeughaltetasche (8) in der Werkzeugwechselstation (S) aus einer Förderposition, in der die Werkzeughaltetasche (8) in einem Trägersitz (10) untergebracht ist und mit dem Förderer (7) in Eingriff steht, und einer Wechselposition, in der die Werkzeughaltetasche (8) aus dem Trägersitz (10) herausgezogen und von dem Förderer (7) herausgezogen wird und in der Werkzeugwechselstation (S) verbleiben kann, zu bewegen, während die anderen Werkzeughaltetaschen (8) durch den Förderer (7) entlang des Förderwegs (P) bewegt werden können;
die Ausrückvorrichtung (14) zwischen einer Aufnahmeposition, in der die Ausrückvorrichtung (14) mit der in der Förderposition in der Werkzeugwechselstation (S) angeordneten Werkzeughaltetasche (8) gekoppelt ist, und einer Ausrückposition bewegbar ist, in der die Ausrückvorrichtung (14) die Werkzeughaltetasche (8), mit der sie noch gekoppelt ist, in der Wechselposition hält;
der Förderer (7) und die Ausrückvorrichtung (14) gegenseitig so angeordnet sind, dass der Förderer (7) frei ist, die Werkzeughaltetaschen (8) entlang des Förderweges (P) zu bewegen, wenn sich die Ausrückvorrichtung (14) sowohl in der Aufnahmeposition als auch in der Freigabeposition befindet,
die Ausrückvorrichtung (14) so konfiguriert ist, dass sie, wenn sie sich in der Aufnahmeposition befindet, automatisch mit einer Werkzeughaltetasche (8) koppelt, die in der Förderposition in der Werkzeugwechselstation (S) angeordnet ist, um die Werkzeughaltetasche (8) von der Förderposition in die Wechselposition zu bewegen, wenn sich die Ausrückvorrichtung (14) von der Aufnahmeposition in die Ausrückposition bewegt;
jeder Trägersitz (10) so geformt ist, dass er es der im Trägersitz (10) untergebrachten Werkzeughaltetasche (8) ermöglicht, sich in der Werkzeugwechselstation (S) als Ergebnis der automatischen Kopplung der Werkzeughaltetasche (8) mit der Ausrückvorrichtung (14) und der Bewegung der Ausrückvorrichtung (14) aus der Aufnahmeposition automatisch von dem Trägersitz (10) zu lösen
das Werkzeugmagazin (5) ferner eine Führungseinrichtung (22) umfasst, die von dem Förderer (7) getragen wird und sich entlang des Förderweges (P) erstreckt, mit Ausnahme eines Abschnitts des Förderweges (P), der sich durch die Werkzeugwechselstation (S) erstreckt, um die Werkzeughaltetaschen (8) entlang des Förderweges (P) zu führen;
die Führungseinrichtung (22) eine an der Wechselstation (S) unterbrochene Nut (23) aufweist, um den Förderweg (P) der Werkzeughaltetaschen (8) mit Ausnahme des durch die Werkzeugwechselstation (S) verlaufenden Abschnitts des Förderwegs (P) zu definieren;
jede Werkzeughaltetasche (8) einen Schieber (24) aufweist, der gleitend mit der Nut (23) gekoppelt ist,
die Ausrückvorrichtung (14) ferner einen Kupplungssitz (15) aufweist, der so gestaltet ist, dass er mit der Führungsvorrichtung (22) zusammenwirkt, wenn sich die Ausrückvorrichtung (14) in der Aufnahmeposition befindet, um die Werkzeughaltetaschen (8) entlang des Abschnitts des Förderwegs (P) zu führen, der sich durch die Werkzeugwechselstation (S) erstreckt, und um die Ausrückvorrichtung (14) automatisch mit der Werkzeughaltetasche (8) in der Förderposition in der Werkzeugwechselstation (S) zu kuppeln;
der Kupplungssitz (15) der Ausrückvorrichtung (14) durch eine weitere Nut (15) gebildet wird, die, wenn sich die Ausrückvorrichtung (14) in der Aufnahmeposition befindet, mit der Nut (23) der Führungsvorrichtung (22) durchgängig ist, um eine Verlängerung der Nut (23) der Führungsvorrichtung (22) zu bilden und dem Förderweg (P) der Werkzeughaltetaschen (8) Kontinuität zu verleihen.

2. Werkzeugmagazin (5) nach Anspruch 1, wobei eine in der Förderposition in der Werkzeugwechselstation (S) angeordnete Werkzeughaltetasche (8) bei ihrer Bewegung zwischen der Förderposition und der Freigabeposition durch zwei einander zugewandte seitliche Führungen (20) geführt wird, die so gestaltet sind, dass sie gleitend mit entsprechenden seitlichen Gleitstücken (21) zusammenwirken, die auf gegenüberliegenden Seiten der Werkzeughaltetasche (8) ausgebildet sind.

3. Werkzeugmagazin (5) nach Anspruch 2, wobei jede der beiden seitlichen Führungen (20) einen ersten Abschnitt (20a), der in der Werkzeugwechselstation (S) stationär ist, und einen zweiten Abschnitt (20b) aufweist, der an jedem Trägersitz (10) ausgebildet ist, um mit dem Trägersitz (10) infolge der Bewegung des Förderers (7) beweglich zu sein, und der mit dem entsprechenden ersten Abschnitt (20a) nur dann ausgerichtet ist, wenn der Trägersitz (10) in der Werkzeugwechselstation (S) stationär ist.

4. Werkzeugmagazin (5) nach Anspruch 3, wobei die ersten Abschnitte (20a) der beiden seitlichen Führungen (20) außerhalb des Förderers (7) auf gegenüberliegenden Seiten der Ausrückvorrichtung (14) angeordnet sind und durch entsprechende Spuren definiert sind,
die zweiten Abschnitte (20b) jeder seitlichen Führung (20) auf den jeweiligen Seiten jedes Trägersitzes (10) angeordnet sind und durch jeweilige Bahnen definiert werden, die, wenn sich der entsprechende Trägersitz (10) in der Werkzeugwechselstation (S) befindet, jeweils die Verlängerung des entsprechenden ersten Abschnitts (20a) der Linearführung (20) bilden.

5. Werkzeugmagazin (5) nach einem der vorhergehenden Ansprüche, wobei der Förderer einen um eine Achse (X) drehbar gelagerten Drehtisch (7) aufweist, die Werkzeughaltetaschen (8) entlang eines Umfangsabschnitts des Drehtischs (7) angeordnet sind und die Förderbahn (P) eine geschlossene Ringbahn ist, und die Führungseinrichtung (22) eine feste Scheibe aufweist, die dem Drehtisch (7) zugewandt auf der der Werkzeughaltetasche (8) gegenüberliegenden Seite angeordnet ist und auf einer dem Drehtisch (7) zugewandten Fläche eine Ringnut (23) aufweist, die koaxial zur Achse (X) verläuft und die Nut (23) definiert, die an der Werkzeugwechselstation (S) unterbrochen ist.

6. Werkzeugmagazin (5) nach Anspruch 5 in Abhängigkeit von Anspruch 4, wobei die Ausrückvorrichtung (14) um eine feste Achse (C) zwischen der Aufnahmeposition und der Ausrückposition drehbar gelagert ist, die eine Kippstellung der Werkzeughaltetasche (8) in Bezug auf den Drehtisch (7) definiert,
die ersten Abschnitte (20a) der beiden seitlichen Führungen (20) außerhalb des Drehtisches (7) auf gegenüberliegenden Seiten der Ausrückvorrichtung (14) angeordnet sind und jeder erste Abschnitt (20a) durch eine gekrümmte Spur koaxial zur Drehachse (C) der Ausrückvorrichtung (14) definiert ist, und
die zweiten Abschnitte (20b) jeder seitlichen Führung (20) auf jeweiligen Seiten jedes Trägersitzes (10) angeordnet sind und durch jeweilige gekrümmte Bahnen definiert sind, die, wenn sich der entsprechende Trägersitz (10) in der Werkzeugwechselstation (S) befindet, koaxial zu der Drehachse (C) der Ausrückvorrichtung (14) sind und jeweils die Verlängerung des entsprechenden ersten Abschnitts (20a) der linearen Führung (20) bilden.

7. Automatischer Werkzeugwechsler (1) für eine numerisch gesteuerte Werkzeugmaschine (2), wobei der Werkzeugwechsler (1) umfasst
- das Werkzeugmagazin (5) nach einem der vorhergehenden Ansprüche zum Speichern einer Vielzahl von Werkzeugen (3); und
- einen Werkzeugwechsler (6), um gleichzeitig ein erstes Werkzeug (3) von einer jeweiligen Werkzeughaltetasche (8), das von der Fördereinrichtung (7) in der Werkzeugwechselstation (S) gelöst ist, und ein zweites Werkzeug (3) von der Werkzeugmaschine (2) aufzunehmen und die Werkzeuge (3) auszutauschen, so dass das erste Werkzeug (3) mit der Werkzeugmaschine (2) und das zweite Werkzeug (3) mit die Werkzeughaltetasche (8) gekoppelt ist.

8. Werkzeugwechsler nach Anspruch 7, ferner mit einer elektronischen Steuereinheit (13) zur Steuerung des Betriebs des Förderers (7) und des Werkzeugwechslers (6) sowie zum Ein- und Auskuppeln der Werkzeughaltetaschen (8) vom Förderer (7) in der Werkzeugwechselstation (S);
wobei der Förderer (7) eine Vielzahl von Trägersitzen (10) aufweist, um entsprechende Werkzeughaltetaschen (8) aufzunehmen und zu tragen, und wobei während des Betriebs mindestens einer der Trägersitze (10) leer von einer Werkzeughaltetasche (8) ist, um eine leere Position auf dem Förderer (7) zu definieren;
wobei die elektronische Steuereinheit (13) so konfiguriert ist, dass sie nacheinander und für ein Paar von ersten und zweiten Werkzeugen (3), die ausgetauscht werden sollen, bewirkt, dass
- der Förderer (7) eine Werkzeughaltetasche (8) zur Werkzeugwechselstation (S) bringt;
- der Förderer (7) eine Werkzeughaltetasche (8) zur Werkzeugwechselstation (S) bringt,
- die Werkzeughaltetasche (8) in der Werkzeugwechselstation (S), um sich von der Förderposition, in der die Werkzeughaltetasche (8) in den Förderer (7) eingreift, in die Wechselposition zu bewegen, in der die Werkzeughaltetasche (8) von der Fördereinrichtung (7) gelöst ist,
- die Werkzeugmaschine (2) stoppt;
- den Werkzeugwechsler (6) gleichzeitig die ersten und zweiten Werkzeuge (3) aufnimmt;
- den Werkzeugwechsler (6) zum Auswechseln des ersten und zweiten Werkzeugs (3);
- die Werkzeugmaschine (2) arbeitet;
- der Förderer (7) den leeren Trägersitz (10) zur Werkzeugwechselstation bringt; und
- die Werkzeughaltetasche (8) in der Werkzeugwechselstation (S) von der Wechselposition in die Förderposition zu bewegen, so dass die Werkzeughaltetasche (8) die leere Position auf dem Förderer (7) einnimmt und die Werkzeughaltetasche (8) wieder in den Förderer (7) einrastet.

## Revendications

1. Magasin d'outils (5) pour un changeur d'outils automatique (1) pour une machine-outil à commande numérique (2) ; le magasin d'outils (5) comprend un convoyeur (7) et une pluralité de poches porte-outil (8) portées par le convoyeur (7) pour se déplacer le long d'un chemin de convoyage (P) et passer par un poste de changement d'outil (S) ;
le convoyeur (7) comprend une pluralité de sièges de support (10) conçus pour loger de manière individuelle et libérable des poches porte-outil (8) respectives pour les guider le long du chemin de convoyage (P) ;
les poches porte-outil (8) sont montées sur le convoyeur (7) de façon à être aptes à être désolidarisées de manière individuelle et automatique du convoyeur (7) dans le poste de changement d'outil (S) pour permettre au convoyeur (7) de déplacer les poches porte-outil (8) mises en prises avec le convoyeur (7) le long du chemin de convoyage (P), tout en laissant une poche porte-outil (8) désolidarisée du convoyeur (7) dans le poste de changement d'outil (S) ;
le magasin d'outils (5) comprend en outre un dispositif de désolidarisation (14) agencé au niveau du poste de changement d'outil (S) pour déplacer une poche porte-outil (8) dans le poste de changement d'outil (S) d'une position de convoyage, dans laquelle la poche porte-outil (8) est logée dans un siège de support (10) et mise en prise avec le convoyeur (7), à une position de changement, dans laquelle la poche porte-outil (8) est extraite du siège de support (10) et désolidarisée du convoyeur (7) et peut être laissée dans le poste de changement d'outil (S), tandis que les autres poches porte-outil (8) peuvent être déplacées par le convoyeur (7) le long du chemin de convoyage (P) ;
le dispositif de désolidarisation (14) est mobile entre une position de réception, dans laquelle le dispositif de désolidarisation (14) est couplé à la poche porte-outil (8) agencée dans la position de convoyage dans le poste de changement d'outil (S), et une position de désolidarisation, dans laquelle le dispositif de désolidarisation (14) retient la poche porte-outil (8), à laquelle il est encore couplé, dans la position de changement ;
le convoyeur (7) et le dispositif de désolidarisation (14) sont mutuellement agencés de sorte que le convoyeur (7) soit libre de déplacer les poches porte-outil (8) le long du chemin de convoyage (P) lorsque le dispositif de désolidarisation (14) est à la fois dans la position de réception et dans la position de désolidarisation ;
le dispositif de désolidarisation (14) est configuré pour se coupler automatiquement, lorsqu'il est dans la position de réception, avec une poche porte-outil (8) agencée dans la position de convoyage dans le poste de changement d'outil (S), de façon à déplacer la poche porte-outil (8) de la position de convoyage à la position de changement lorsque le dispositif de désolidarisation (14) se déplace de la position de réception à la position de désolidarisation ;
chaque siège de support (10) est façonné de façon à permettre à la poche porte-outil (8) logée dans le siège de support (10) de se désolidariser automatiquement du siège de support (10) dans le poste de changement d'outil (S) en conséquence du couplage automatique de la poche porte-outil (8) avec le dispositif de désolidarisation (14) et du mouvement du dispositif de désolidarisation (14) de la position de réception à la position de désolidarisation ;
le magasin d'outils (5) comprend en outre un dispositif de guidage (22) porté par le convoyeur (7) et s'étendant le long du chemin de convoyage (P), à l'exception d'une section du chemin de convoyage (P) s'étendant en passant par le poste de changement d'outil (S), pour guider les poches porte-outil (8) le long du chemin de convoyage (P) ;
le dispositif de guidage (22) comprend une rainure (23) interrompue au niveau du poste de changement (S), de façon à définir le chemin de convoyage (P) des poches porte-outil (8), à l'exception de la section du chemin de convoyage (P) s'étendant en passant par le poste de changement d'outil (S) ;
chaque poche porte-outil (8) comprend un coulisseau (24) couplé de manière coulissante à la rainure (23) ;
le dispositif de désolidarisation (14) comprend en outre un siège de couplage (15) conçu pour coopérer avec le dispositif de guidage (22) lorsque le dispositif de désolidarisation (14) est dans la position de réception pour guider les poches porte-outil (8) le long de la section du chemin de convoyage (P) s'étendant en passant par le poste de changement d'outil (S) et pour coupler automatiquement le dispositif de désolidarisation (14) à la poche porte-outil (8) dans la position de convoyage dans le poste de changement d'outil (S) ;
le siège de couplage (15) du dispositif de désolidarisation (14) est formé par une rainure supplémentaire (15) qui, lorsque le dispositif de désolidarisation (14) est dans la position de réception, est continue avec la rainure (23) du dispositif de guidage (22) de façon à former une extension de la rainure (23) du dispositif de guidage (22) et donner une continuité au chemin de convoyage (P) des poches porte-outil (8).

2. Magasin d'outils (5) selon la revendication **1,** dans lequel une poche porte-outil (8) agencée dans la position de convoyage dans le poste de changement d'outil (S) est guidée dans son mouvement entre la position de convoyage et la position de désolidarisation par deux guides latéraux (20) se faisant face, conçus pour coopérer de manière coulissante avec des coulisseaux latéraux (21) respectifs formés sur des côtés opposés de la poche porte-outil (8).

3. Magasin d'outils (5) selon la revendication **2,** dans lequel chacun des deux guides latéraux (20) comprend une première partie (20a) stationnaire dans le poste de changement d'outil (S) et une seconde partie (20b) formée sur chaque siège de support (10) pour être mobile avec le siège de support (10) en conséquence du mouvement du convoyeur (7) et qui est alignée avec la première partie (20a) correspondante uniquement lorsque le siège de support (10) est stationnaire dans le poste de changement d'outil (S).

4. Magasin d'outils (5) selon la revendication **3,** dans lequel les premières parties (20a) des deux guides latéraux (20) sont agencées à l'extérieur du convoyeur (7), sur des côtés opposés du dispositif de désolidarisation (14) et sont définies par des pistes respectives ;
les secondes parties (20b) de chaque guide latéral (20) sont agencées sur des côtés respectifs de chaque siège de support (10) et sont définies par des pistes respectives qui, lorsque le siège de support (10) correspondant est dans le poste de changement d'outil (S), forment chacune l'extension de la première partie (20a) correspondante du guide linéaire (20).

5. Magasin d'outils (5) selon l'une quelconque des revendications précédentes, dans lequel le convoyeur comprend une table rotative (7) montée pour être en rotation autour d'un axe (X) ; les poches porte-outil (8) sont agencées le long d'une partie périphérique de la table rotative (7), et le chemin de convoyage (P) est un chemin annulaire fermé ; et le dispositif de guidage (22) comprend un disque fixe, qui est agencé en face de la table rotative (7), sur le côté opposé par rapport à la poche porte-outil (8), et possède, sur une surface faisant face à la table rotative (7), une rainure annulaire (23) qui est coaxiale à l'axe (X) et définit la rainure (23) interrompue au poste de changement d'outil (S).

6. Magasin d'outils (5) selon la revendication **5,** lorsque prise en dépendance de la revendication **4,** dans lequel le dispositif de désolidarisation (14) est monté pour être en rotation autour d'un axe fixe (C) entre la position de réception et la position de désolidarisation, qui définit une position d'inclinaison de la poche porte-outil (8) par rapport à la table rotative (7) ;
les premières parties (20a) des deux guides latéraux (20) sont agencées à l'extérieur de la table rotative (7), sur des côtés opposés du dispositif de désolidarisation (14), et chaque première partie (20a) est définie par une piste incurvée coaxiale à l'axe de rotation (C) du dispositif de désolidarisation (14) ; et
les secondes parties (20b) de chaque guide latéral (20) sont agencées sur des côtés respectifs de chaque siège de support (10) et sont définies par des pistes incurvées respectives qui, lorsque le siège de support (10) correspondant est dans le poste de changement d'outil (S), sont coaxiales à l'axe de rotation (C) du dispositif de désolidarisation (14) et forment chacune l'extension de la première partie (20a) correspondante du guide linéaire (20).

7. Changeur d'outils (1) automatique pour une machine-outil à commande numérique (2), le changeur d'outils (1) comprend :
- le magasin d'outils (5) selon l'une quelconque des revendications précédentes pour stocker une pluralité d'outils (3) ; et
- un changeur d'outils (6) pour simultanément prendre un premier outil (3) dans une poche porte-outil (8) respective désolidarisée du convoyeur (7) dans le poste de changement d'outil (S), et un second outil (3) dans la machine-outil (2) et pour échanger les outils (3) de sorte que le premier outil (3) soit couplé à la machine-outil (2) et que le second outil (3) soit couplé à la poche porte-outil (8).

8. Changeur d'outils selon la revendication **7,** comprenant en outre une unité de commande électronique (13) pour commander le fonctionnement du convoyeur (7) et du changeur d'outils (6) et la mise en prise/la désolidarisation des poches porte-outil (8) du convoyeur (7) dans le poste d'échange d'outil (S) ;
le convoyeur (7) possède une pluralité de sièges de support (10) pour recevoir et porter des poches porte-outil (8) respectives, et dans lequel, pendant le fonctionnement, au moins l'un des sièges de support (10) est dépourvu d'une poche porte-outil (8) pour définir une position vide sur le convoyeur (7) ;
l'unité de commande électronique (13) est configurée pour amener, en séquence et pour une paire de premier et second outils (3) devant être échangés :
- le convoyeur (7) à apporter une poche porte-outil (8) au poste de changement d'outil (S) ;
- la poche porte-outil (8) dans le poste de changement d'outil (S) à se déplacer de la position de convoyage, dans laquelle la poche porte-outil (8) se met en prise avec le convoyeur (7), à la position de changement, dans laquelle la poche porte-outil (8) est désolidarisée du convoyeur (7) ;
- la machine-outil (2) à s'arrêter ;
- le changeur d'outils (6) à simultanément prendre les premier et second outils (3) ;
- l'échangeur d'outils (6) à échanger les premier et second outils (3) ;
- la machine-outil (2) à fonctionner ;
- le convoyeur (7) à apporter le siège de support (10) vide au poste de changement d'outil (S) ; et
- la poche porte-outil (8) dans le poste de changement d'outil (S) à se déplacer de la position de changement à la position de convoyage, de façon à amener la poche porte-outil (8) à occuper la position vide sur le convoyeur (7) et la poche porte-outil (8) à se remettre en prise avec le convoyeur (7).
